(19) Europäisches Patentamt
European Patent Office
Office européen des brevets

(11) **EP 2 975 845 A1**

(12) **EUROPEAN PATENT APPLICATION**

(43) Date of publication:
**20.01.2016 Bulletin 2016/03**

(51) Int Cl.:
***H04N 13/02*** *(2006.01)*

(21) Application number: **14306158.8**

(22) Date of filing: **17.07.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Drazic, Valter**
**35576 CESSON-SÉVIGNÉ (FR)**

• **Touzé, David**
**35576 CESSON-SÉVIGNÉ (FR)**
• **Olivier, Yannick**
**35576 CESSON-SÉVIGNÉ (FR)**

(74) Representative: **Browaeys, Jean-Philippe**
**Technicolor**
**1, rue Jeanne d'Arc**
**92443 Issy-les-Moulineaux (FR)**

(54) **3d high dynamic range image capture system**

(57) The system comprises an image capture device configured to capture within a same frame at least two simultaneously views of a scene under different viewpoints and with different capture conditions having the same exposure time, to capture successively such frames, and to distribute the different capture conditions for those views and frames such that, in any two successive frames, two views that are captured under the same viewpoint are captured with said different capture conditions ; an image processing module configured to process the captured views of at least one frame, such as to generate one HDR view of said scene under each of said different viewpoints.

Fig.6

**Description**

Technical Field

The invention concerns the 3D capture of video images of a scene under High Dynamic Range ("HDR") or Wide dynamic Range ("WDR").

Background Art

The 3D capture or stereoscopic image of a scene usually requires at least a left view (L) and a right view (R) of this scene.

For a usual HDR capture of a scene, it is known to use bracketing, i.e. to take several simultaneous or time-shifted shots of the same scene using different exposure times. The result of these different shots or views is then combined to get the HDR image of this scene. Such a combination is called "fusion". In case of time-shifted shots, the fusion that should be implemented to get the HDR images is temporal, whereas, in case of simultaneous shots, the fusion that should be implemented to get the HDR images is spatial.

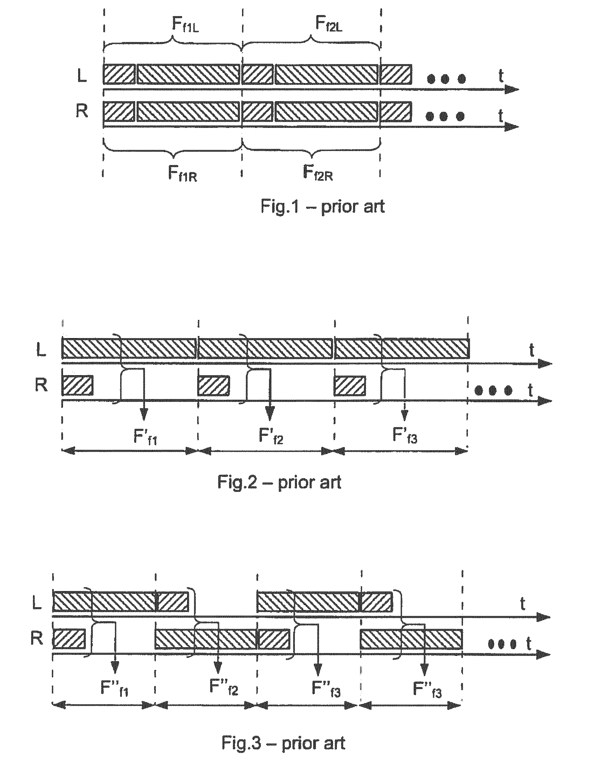

In the known temporal stereoscopic HDR first mode of video capture illustrated on figure 1, a left (L) and a right (R) video stream is generated that is synchronously bracketing the exposure. In this mode, the dynamic range is expanded by fusing a low exposure frame and a temporally adjacent high exposure frame into the fused frames $F_{f1R}$, $F_{f2R}$, ... for the right channel and into the fused frames $F_{f1L}$, $F_{f2L}$, ... for the left channel, separately within each of the left (L) and right (R) channel. Such a fusion is then temporal. But changing the exposure time in this way is time consuming and limits the range of illumination differences. The second drawback of this mode is that the dynamic range is expanded by fusing frames taken at different instants, i.e. through temporal fusion ; hence motion artifacts will be disturbing or would need complex motion compensation.

In the known spatial stereoscopic HDR second mode of video capture illustrated on figure 2, in each of the left (L) and a right (R) channel, there is simultaneously a fixed but different exposure : here, simultaneously, we have a low exposure in the right channel and a high exposure time in the left channel. In this mode, the dynamic range is expanded by fusing a left view and a right view of a same frame, namely a left view captured under high exposure and a right view captured under low exposure, into the fused frames $F'_{f1}$, $F'_{f2}$, ... . Such a fusion is then spatial. In this mode, there are two major drawbacks. The most serious one is the necessity to spatially compensate for the differences between the left viewpoint and the right view point, using for instance disparity maps. But computing disparities requires to identify spatial correlations between the pixels of the left view and the pixels of the right view, i.e. to bring into correspondence left pixels of the view captured by the left channel (L) and right pixels of the view captured by the right channel (R). Disparity estimation is an ill posed problem and here the images are also taken with different exposures which make the correspondence problem even more complicated. Moreover, in occluded regions of the scene, it will not be possible to generate a HDR content. The second problem is that there will be a different amount of motion blur between the left and right views because of different exposure times.

Paragraphs [0032], [0033] and [0039] of US2010/128108 (Song et al.), discloses a stereoscopic HDR mode of video capture illustrated on figure 3 where, in each channel, the exposure time is changed alternatively, from low to high, such that, simultaneously, the exposures are different in the left (L) and the right channel (R). In this document, in reference to its figure 3 and paragraph [0042], the exposure strategy is called "zigzag exposure".

Paragraphs [0049] to [0054] of this document disclose the preferred fusing strategy, based on spatial correlation between simultaneous shots, i.e. spatial fusion. Such a spatial fusion is preferred "because correlations between different images in the same frames are greater than between different images in different frames" (see § [0049]). Using images "in the same frames" is also emphasized in § [0050], line 2 and in § [0054], line 2.

Summary of invention

Basically, in order to avoid at least some of the aforementioned drawbacks, the invention proposes to capture all views under the same exposure time, but to change by other ways the capture conditions between the different views used for spatial and/or temporal fusion. Such other ways are for instance different apertures of the stop of the objective(s) of the system to capture the views, different luminous intensities obtained for instance by using different optical filters with neutral densities on the optical path of the light used for the capture of views, and/or different electronic gains of the image sensors used in the system to capture the views.

The subject of the invention is a notably a 3D High Dynamic Range (HDR) image capture system for delivering at least one 3D HDR image of a scene, comprising:

an image capture device configured to capture within a same frame at least two simultaneously views of said scene under different viewpoints and with different capture conditions, to capture successively such frames, and to distribute the different capture conditions for those views and frames such that, in any two successive frames, two views that are captured under the same viewpoint are captured with said different capture conditions ;

an image processing module configured to process the captured views of at least one frame, such as to generate one HDR view of said scene under each of said different viewpoints,

the combination of said generated HDR views forming the at least one said 3D High Dynamic Range (HDR) image of the scene,

wherein, within each frame, the different capture conditions have all the same exposure time.

Preferably, said different capture conditions comprises different apertures, and/or different luminous intensities, and/or different electronic gains of the image sensors used in the system to capture said views. The different apertures generally concern the aperture of the stop of the objective(s) of the image capture device. The different luminous intensities may be obtained for instance by using different optical filters on the optical path of the light used for the capture of views. Preferably, these optical filters have a neutral density. The 3D image capture system may comprise a rig of at least two mono-view cameras, or may be a multilens camera or a monolens camera configured to capture simultaneously different views of a scene under different viewpoints.

Preferably, said image capture device comprises one objective lens for the capture of each of the at least two simultaneously views of a same frame and at least one rotating disc comprising different sectors made of different neutral optical filters mounted such as to filter the light entering in each objective lens and such as to rotate at a period which is a multiple of the frame duration, the different neutral filters being adapted to provide, with said filtering and said rotating, the different capture conditions with said distribution.

Preferably, in a first general variant, the image processing module is configured to process the captured views of only one frame such as to generate one HDR view of said scene under each of said different viewpoints, wherein said generation of HDR views is obtained, for each given viewpoint, by fusion of the view of said one frame which is captured under said given viewpoint with its given capture conditions, with an estimated view of said frame under the same given viewpoint which is estimated from another view of the same frame. This other view is then captured under a viewpoint different from said given view point and with capture conditions that are different from said given capture conditions.

Preferably, in this first general variant, the 3D HDR image capture system comprises also a module configured to estimate said estimated view of a frame under a given view point by applying an estimation of disparity to said another view of the same frame, wherein said estimation of disparity is obtained between said view of this frame captured under said given view point and said another view of the same frame. Such estimation of disparity is known per se and generally based on the difference of horizontal spatial positions between pixels that correspond one with the other in the two views captured under different viewpoints.

Preferably, in a second general variant, the image processing module is configured to process the captured views of a plurality of successive frames such as to generate one HDR view of said scene under each of said different viewpoints, wherein said generation of HDR views is obtained, for each given viewpoint, by fusion of the views of said successive frames which are captured under said given viewpoint.

Preferably, in this second general variant, the 3D HDR image capture system comprises also a module configured to motion compensate said views of successive frames before fusion of said views.

The proposed solution may have notably the two following advantages :

- Limitation of exposure difference between the difference channels. This exposure is not limited anymore and can be for instance configured with optical filters with different neutral densities.
- Removal of differential motion blur due to the same exposure time on all images (either temporally or spatially). This improves and makes easier the motion compensation.

Brief description of drawings

The invention will be more clearly understood on reading the description which follows, given by way of non-limiting example and with reference to the appended figures in which:

- Figure 1 illustrates a first mode of stereoscopic HDR video capture according to the prior art, based on temporal fusion;
- Figure 2 illustrates a second mode of stereoscopic HDR video capture according to the prior art, based on spatial fusion;
- Figure 3 illustrates a third mode of stereoscopic HDR video capture according to the document US2010/128108, based again on spatial fusion;
- Figure 4 illustrates a rotating disc included in the 3D HDR image capture system according to the first and second general embodiment of the invention ;
- Figure 5 illustrates the distribution of the different capture conditions on the left and right channels of the 3D HDR image capture system according to a first general embodiment;
- Figure 6 is a flowchart illustrating how the 3D HDR image capture system according to the first general embodiment provides 3D HDR images ;
- Figure 7 illustrates the distribution of the different capture conditions on the left and right channels of the 3D HDR image capture system according to a second general embodiment;
- Figure 8 is a flowchart illustrating how the 3D HDR image capture system according to the second general embodiment provides 3D HDR images ;
- Figure 9 illustrates an example of fusion of views that can be embodied in the 3D HDR image capture systems according to the first and/or second general embodiment.

Description of embodiments

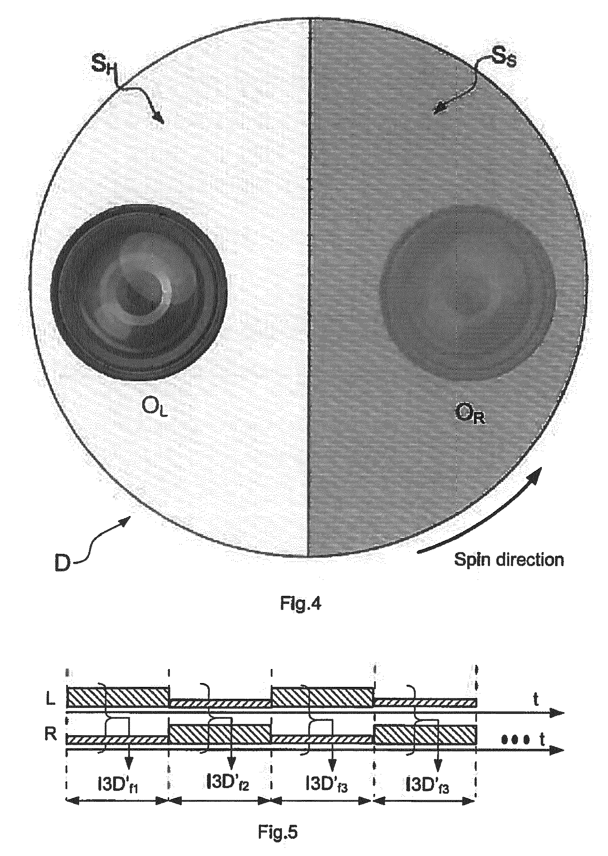

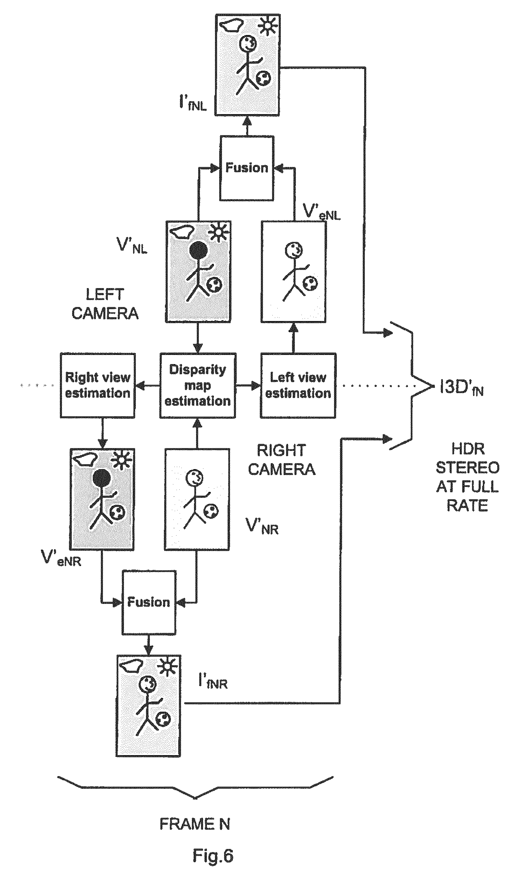

The 3D HDR image capture system of the invention comprises an image capture device and an image processing module connected in a manner known per se to the image capture device in order to be able to process views provided by the image capture device.
It is to be understood that the invention may be implemented in various forms of hardware, software, firmware, special purpose processors, or combinations thereof. The invention may be notably implemented as a combination of hardware and software. The hardware would generally include the image capture device configured notably to capture different views of a scene under different view points and the image processing module. Such an image capture device may include several cameras grouped on a rig, or only one camera. The software may be implemented as an application program tangibly embodied on a program storage unit included notably in the image processing module. The application program may be uploaded to, and executed by, the image processing module with any suitable architecture. Preferably, the image processing module generally comprise a central processing unit ("CPU"), a random access memory ("RAM"), and input/output ("I/O") interfaces, notably for connection with the image capture device of the system. The image processing module may also include an operating system and microinstruction code. Some various processes and functions described herein may be either part of the microinstruction code or part of the application program, or any combination thereof, which may be executed by a CPU. In addition, through the input/output ("I/O") interfaces, other peripheral units may be connected to the image processing module and the image capture device such as an additional data storage unit and a printing unit.
It will be appreciated by those skilled in the art that block diagrams, flow charts, and the like presented herein represent conceptual views of illustrative circuitry embodying the invention. They may be at least partly represented in computer readable media.
In both general but non limiting embodiments described below, the image capture device of the 3D HDR image capture system comprises a left camera and a right camera sufficiently close one to another and having each a main objective lens, respectively $O_L$ and $O_R$, as represented on figure 4. Each camera has its own image sensors. This image capture device comprises a rotating disc D comprising two sectors $S_S$ and $S_H$, each corresponding to half the disc and both made of an optical filter with neutral density. This disc D is mounted on a rotating axis rotated by a motor such that each sector $S_S$, $S_H$ filters successively the light entering each objective lens $O_L$, $O_R$. The optical filter of the sector $S_S$ is adapted to absorb for instance 50% of the light illuminating the scene to capture, and the optical filter of the sector $S_H$ is adapted not to absorb significantly the light illuminating the scene. The motor is controlled in a manner known per se such that the rotating period of the disc corresponds to the duration of two successive frames. Advantageously, such a rotating disc provides the distribution of level of illuminations on the image sensors of the left camera and of the right camera that is represented on figure 5 : a first frame where the level of illumination for the left channel (L) is high whereas the level of illumination for the right channel (R) is low, a second frame where the level of illumination for the left channel (L) is low whereas the level of illumination for the right channel (R) is high, and so on. Instead of varying the exposure time of both cameras as in the prior art, both cameras are set at the same exposure time, same aperture and same ISO level, and the level of light that enters the cameras is modulated by the rotating two-sector neutral density disc D, the camera exposure being in synchronization with the rotating disc. If both cameras are further apart as part of a rig, one can use synchronized LCD shutters or even two different rotating discs.
A **first general embodiment** of the invention will now be described.
As shown on figure 6, the 3D HDR image capture system is configured to capture simultaneously, in a same frame N, a left view $V'_{NL}$ and a right view $V'_{NR}$ of this scene, i.e. views under two different viewpoints, a left one and a right one; as shown on figure 5 and explained above, with the rotating disc D or any equivalent feature, this system is also configured to capture these two simultaneous views $V'_{NL}$ and $V'_{NR}$ under different level of illuminations but the same exposure time such as to get a high light view through the filter $F_S$, and a low light view through the filter $F_H$, i.e. respectively an under-exposed view captured under low level of illumination adapted to capture details in the bright areas of the scene and an over-exposed view under high level of illumination adapted to capture details in the dark areas of the scene.

The image capture device is also configured to perform successively several times the capture of two simultaneous views as described above.

Through these successive captures, the exposure strategy implemented by the image capture device is organized in "zigzag" as in US2010/128108 ; in each channel L and R, the level of captured light is changed alternatively but with the same exposure time contrary to US2010/128108; as illustrated on figure 5, the level of captured light is changed from a low level to a high level, such that, simultaneously, the levels of captured light are different between the left channel L and the right channel R. As, simultaneously, the level of exposure light are different between the left channel L and the right channel R, each pair of simultaneous views comprises a high-light (or under-exposed) view to capture details in the bright areas of the scene and a low-light (or over-exposed) view to capture details in the dark areas of the scene.

In this first general embodiment, the captured views $V'_{NL}$, $V'_{NR}$ of only one frame N are processed at the same time as follows.

The 3D HDR image capture system comprises a module configured to estimate views as follows (see figure 6) :

- an estimated left view $V'_{eNL}$ is estimated by applying an estimation of disparity to the captured right view $V'_{NR}$, said estimation of disparity being evaluated in a manner known per se between the captured left view $V'_{NL}$ and the captured right view $V'_{NR}$;
- an estimated right view $V'_{eNR}$ is estimated by applying the same estimation of disparity to the captured left view $V'_{NL}$. Instead of using the same estimation of disparity, another estimation can be used instead.

Having obtained the left estimated view $V'_{eNL}$ and the right estimated view $V'_{eNR}$ using this module, then:

- the estimated left view $V'_{eNL}$ is fused with the captured left view $V'_{NL}$ into a left HDR view $I'_{fNL}$ ;
- the estimated right view $V'_{eNR}$ is fused with the captured right view $V'_{NR}$ into a right HDR view $I'_{fNR}$.

An example of such a fusion of views will be described below.

The combination of the left HDR view $I'_{fNL}$ and of the right HDR view $I'_{fNR}$ forms a 3D HDR image of the scene I3D'$_{fN}$. The capture and processing above is repeated several times such that the 3D HDR image capture system provides a sequence of 3D HDR images.

A **second general embodiment** of the invention will now be described.

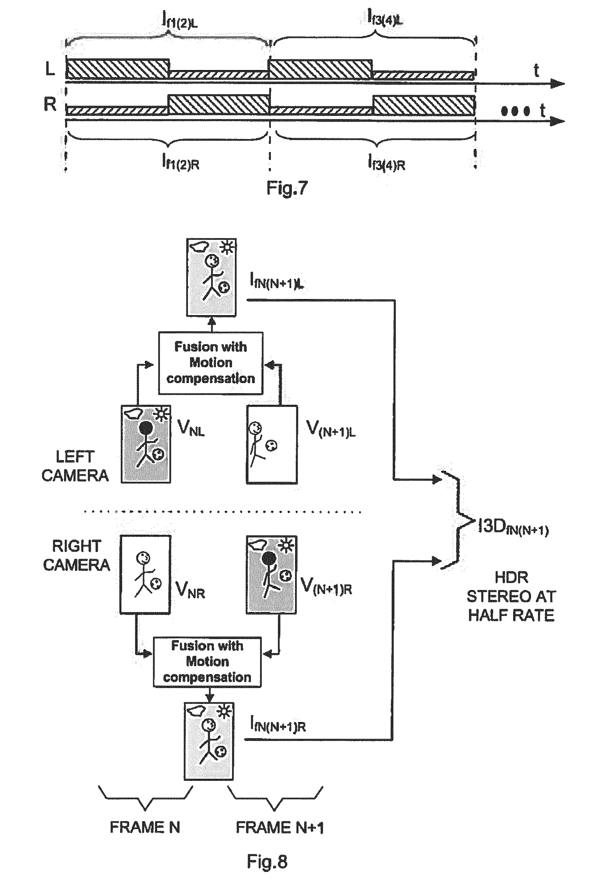

In this second embodiment illustrated on figure 8, the 3D HDR image capture system is also configured to capture simultaneously, in a same frame N, a left view $V_{NL}$ and a right view $V_{NR}$ of this scene, i.e. views under two different viewpoints, a left one and a right one; and, in the next frame N+1, another left view $V_{(N+1)L}$ and another right view $V_{(N+1)R}$ of this scene. As shown on figure 7 which is similar to figure 5 and explained above, with the rotating disc D or any equivalent feature, this system is also configured to capture any simultaneous views under different level of illuminations but the same exposure time such as to get a high light view through the filter $F_S$, and a low light view through the filter $F_H$.

The image capture device then provides the image processing module with successive pairs of simultaneous views.

In this second embodiment, the image processing module is configured to receive images captured by the image capture device and to group successive captures of simultaneous views into groups of views : for instance, views of the pair corresponding to the frame N and views of the pair corresponding to the frame N+1 are grouped into a group. It means that the image capture device is also configured to distribute the high and low exposures such that successive views of a group formed by two successive pairs and captured under the same viewpoint have different exposures, low and high. The image processing module is also configured to motion compensate the successive views of the group that are captured under the same viewpoint and then to fuse the motion compensated views obtained under each viewpoint into a HDR view : for instance, the left views $V_{NL}$, $V_{(N+1)L}$ of the first and second pairs are motion compensated and then fused into a left HDR view $I_{fN(N+1)L}$ as shown at the top of figure 8, and the right views $V_{NR}$, $V_{(N+1)R}$ of the first and second pairs are motion compensated and then fused into a right HDR view $I_{fN(N+1)R}$ as shown at the bottom of figure 8. The combination of the left HDR view $I_{fN(N+1)L}$ and of the right HDR view $I_{fN(N+1)R}$ forms a 3D HDR image of the scene I3D$_{fN(N+1)}$. The motion compensation of successive views captured under the same viewpoint is performed in a way know per se.

The capture and processing above is repeated several times such that the 3D HDR image capture system provides a sequence of 3D HDR images. In this second general embodiment, the obtained 3D HDR images are half rate compared to the first general embodiment.

An example of implementation of the fusion of views as disclosed above in the first and the second general embodiment is detailed below.

In order to fuse a low light view with a high light view of a same channel (left or right) and of successive pairs, the basic idea is to select the best exposed pixels of each view, i.e. the pixels of the low light view for the dark areas and the pixels of the high light view for the bright areas. For all intermediate pixels that are well exposed on both views a blending between the pixels of the two views is realized for this fusion.

More precisely, two thresholds are defined:

- Threshold_v1: defined as a percentage of the low light view saturation value, that defines the limit below which the pixels of the low light view are always selected, because well exposed in the dark areas.
- Threshold_v2: also defined as a percentage of the low light view saturation value, and defines the limit above which the pixels of the high light view are always selected, because well exposed in the bright areas.

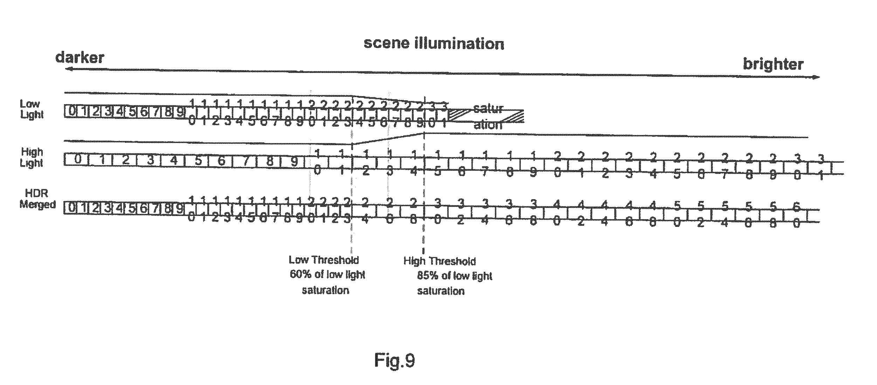

As an example illustrated on figure 9 :

$$Threshold\_v1 = 0.60 * saturation\_value;$$

$$Threshold\_v2 = 0.85 * saturation\_value;$$

It should be noted that these thresholds depend on the relative exposure difference between the two views and on the degree of over-exposure selected for the low light view.

For all the pixels with values between those two thresholds, a weight for each view (low light and high light) is computed as follow:

$$weight\_v1 = (Threshold\_v2 - lum\_low\_light\_view)/(Threshold\_v2 - Threshold\_v1)$$

$$weight\_v2 = 1 - weight\_v1;$$

In this formula, lum_low_light_view represents the luminance of the current pixel of the low light view. Those weights are then used to blend the pixels of the high light view and the low light view as follow:

$$rgb\_fusion = (weight\_v1 *pix\_low\_light\_view + weight\_v2 *pix\_high\_light\_view$$

$$* exposure\_ratio)$$

The exposure_ratio used in the preceding formula is used to rescale the low light view values in the same order of magnitude than the high light view values. Figure 9 details the principle using -bits precision per view and an exposure_ratio of 1 F-stop:

To summarize, an example of a fusion algorithm can be expressed as follow:

$$lum\_low\_light\_view = 0.213 * pix\_r\_low\_light\_view + 0.715 *$$

$$pix\_g\_low\_light\_view + 0.072 * pix\_b\_low\_light\_view ;$$

Any other luminance formula can be used :

$$if (lum\_low\_light\_view < threshold\_v1), \{ weight\_v1 = 1.0; weight\_v2 = 0.0;\}$$

else if (lum_low_light_view >= threshold_v2), { weight_v1 = 0.0; weight_v2 = 1.0;}

else {weight_v1 = (weight_v2 - lum_low_light_view )/( weight_v2-threshold_v1); weight_v2 = 1 - weight_v1;}

The fused view is then defined, for each pixel, by the following values:

$$r\_fusion = weight\_v1 * pix\_r\_low\_light\_view + weight\_v2 * pix\_r\_high\_light\_view * exposure\_ratio;$$

$$g\_fusion = weight\_v1 * pix\_g\_low\_light\_view + weight\_v2 * pix\_g\_high\_light\_view * exposure\_ratio;$$

$$b\_fusion = weight\_v1 * pix\_b\_low\_light\_view + weight\_v2 * pix\_b\_high\_light\_view * exposure\_ratio;$$

For each of the left and right channels, the fusion of the low light view with the high light view of a same channel and of successive pairs provides then a left fused HDR view and a right fused HDR view. The combination of this left fused HDR view and of this right fused HDR view forms a 3D HDR image of the scene.

While the present invention is described with respect to particular examples and preferred embodiments, it is understood that the present invention is not limited to these examples and embodiments. The present invention as claimed therefore includes variations from the particular examples and preferred embodiments described herein, as will be apparent to one of skill in the art. While some of the specific embodiments may be described and claimed separately, it is understood that the various features of embodiments described and claimed herein may be used in combination. Reference numerals appearing in the claims are by way of illustration only and shall have no limiting effect on the scope of the claims.

## Claims

1. A 3D High Dynamic Range (HDR) image capture system for delivering at least one 3D HDR image of a scene, comprising:

   an image capture device configured to capture within a same frame at least two simultaneously views of said scene under different viewpoints and with different capture conditions, to capture successively such frames, and to distribute the different capture conditions for those views and frames such that, in any two successive frames, two views that are captured under the same viewpoint are captured with said different capture conditions ;
   an image processing module configured to process the captured views of at least one frame, such as to generate one HDR view of said scene under each of said different viewpoints,
   the combination of said generated HDR views forming the at least one said 3D High Dynamic Range (HDR) image of the scene,
   **characterized in that**, within each frame, the different capture conditions have all the same exposure time.

2. A 3D HDR image capture system according to claim 1 **characterized in that** said different capture conditions comprises different apertures, and/or different luminous intensities, and/or different electronic gains of the image sensors used in the system to capture said views.

3. A 3D HDR image capture system according to claim 1 or 2 **characterized in that** said image capture device comprises one objective lens ($O_L$, $O_R$) for the capture of each of the at least two simultaneously views of a same frame and at least one rotating disc (D) comprising different sectors ($S_S$, $S_H$) made of different neutral optical filters mounted such as to filter the light entering in each objective lens and such as to rotate at a period which is a multiple of the frame duration, the different neutral filters being adapted to provide, with said filtering and said rotating, the different capture conditions with said distribution.

4. A 3D HDR image capture system according to any one of claims 1 to 3 **characterized in that** the image processing module is configured to process the captured views ($V'_{NL}$, $V'_{NR}$) of only one frame (N) such as to generate one HDR view ($I'_{fNL}$; $I'_{fNR}$) of said scene under each of said different viewpoints, wherein said generation of HDR views ($I'_{fNL}$, $I'_{fNR}$) is obtained,
for each given viewpoint, by fusion of the view ($V'_{NL}$; $V'_{NR}$) of said one frame (N) which is captured under said given viewpoint with its given capture conditions,
with an estimated view ($V'_{eNL}$; $V'_{eNR}$) of said frame under the same given viewpoint which is estimated from another view ($V'_{NR}$; $V'_{NL}$) of the same frame (N).

5. A 3D HDR image capture system according to claim 4 comprising a module configured to estimate said estimated view ($V'_{eNL}$; $V'_{eNR}$) of a frame (N) under a given view point by applying an estimation of disparity to said another view ($V'_{NR}$; $V'_{NL}$) of the same frame (N), wherein said estimation of disparity is obtained between said view ($V'_{NL}$) of this frame captured under said given view point and said another view ($V'_{NR}$) of the same frame.

6. A 3D HDR image capture system according to any one of claims 1 to 3 **characterized in that** the image processing module is configured to process the captured views ($V_{NL}$, $V_{(N+1)L}$, $V_{NR}$, $V_{(N+1)R}$) of a plurality of successive frames (N) such as to generate one HDR view ($I_{fN(N+1)L}$; $I_{fN(N+1)R}$) of said scene under each of said different viewpoints, wherein said generation of HDR views ($I_{fN(N+1)L}$, $I_{fN(N+1)R}$) is obtained, for each given viewpoint, by fusion of the views ($V_{NL}$, $V_{(N+1)L}$; $V_{NR}$, $V_{(N+1)R}$) of said successive frames which are captured under said given viewpoint.

7. An image capture system according to claim 6 comprising a module configured to motion compensate said views ($V_{NL}$, $V_{(N+1)L}$; $V_{NR}$, $V_{(N+1)R}$) of successive frames before fusion of said views.

Fig.1 – prior art

Fig.2 – prior art

Fig.3 – prior art

Fig.4

Fig.5

$I'_{fNL}$

Fusion

$V'_{NL}$

$V'_{eNL}$

LEFT
CAMERA

Right view
estimation

Disparity
map
estimation

Left view
estimation

$I3D'_{fN}$

RIGHT
CAMERA

$V'_{NR}$

HDR
STEREO
AT FULL
RATE

$V'_{eNR}$

Fusion

$I'_{fNR}$

FRAME N

Fig.6

Fig.7

Fig.8

Fig.9

Europäisches
Patentamt

European
Patent Office

Office européen
des brevets

## EUROPEAN SEARCH REPORT

Application Number

EP 14 30 6158

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | SEBASTIAN SCHMIDT ET AL: "High dynamic range stereo video using SIFT and simultaneous multi-exposure", SIGNAL AND IMAGE PROCESSING APPLICATIONS (ICSIPA), 2011 IEEE INTERNATIONAL CONFERENCE ON, IEEE, 16 November 2011 (2011-11-16), pages 82-87, XP032106887, DOI: 10.1109/ICSIPA.2011.6144107 ISBN: 978-1-4577-0243-3 * section I, paragraphs 3-5 * * section II, paragraph 1 and 4 * * section V * | 1-7 | INV. H04N13/02 |
| Y | US 2012/062694 A1 (MURAMATSU HIROKAZU [JP]) 15 March 2012 (2012-03-15) * paragraphs [0008], [0009], [0011] * * paragraphs [0041], [0042] * * paragraphs [0044] - [0046] * | 1-7 | |
| A | MANOJ AGGARWAL ET AL: "Split Aperture Imaging for High Dynamic Range", INTERNATIONAL JOURNAL OF COMPUTER VISION, KLUWER ACADEMIC PUBLISHERS, BO, vol. 58, no. 1, 1 June 2004 (2004-06-01), pages 7-17, XP019216408, ISSN: 1573-1405, DOI: 10.1023/B:VISI.0000016144.56397.1A * abstract * * section 4, first paragraph * | 1-7 | TECHNICAL FIELDS SEARCHED (IPC) H04N |

The present search report has been drawn up for all claims

| Place of search | Date of completion of the search | Examiner |
|---|---|---|
| The Hague | 8 September 2014 | Borcea, Veronica |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 14 30 6158

This annex lists the patent family members relating to the patent documents cited in the above-mentioned European search report.
The members are as contained in the European Patent Office EDP file on
The European Patent Office is in no way liable for these particulars which are merely given for the purpose of information.

08-09-2014

| Patent document cited in search report | | Publication date | Patent family member(s) | | Publication date |
|---|---|---|---|---|---|
| US 2012062694 | A1 | 15-03-2012 | CN | 102422124 A | 18-04-2012 |
| | | | EP | 2501125 A1 | 19-09-2012 |
| | | | JP | 5367640 B2 | 11-12-2013 |
| | | | JP | 2011254170 A | 15-12-2011 |
| | | | US | 2012062694 A1 | 15-03-2012 |
| | | | WO | 2011151867 A1 | 08-12-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

* US 2010128108 A, Song